# EUROPEAN PATENT SPECIFICATION

(11) **EP 4 059 650 B1**
(45) Date of publication and mention of the grant of the patent: **06.05.2026**
(21) Application number: 21162812.8
(22) Date of filing: 16.03.2021
(51) Int. Cl.: B23K 9/095, B23K 9/20

(54) **HANDHELD WELDING GUN WITH A DISPLACEMENT MEASURING SYSTEM**
HANDSCHWEISSPISTOLE MIT WEGMESSSYSTEM
PISTOLET DE SOUDAGE PORTATIF AVEC SYSTÈME DE MESURE DE DÉPLACEMENT

(43) Date of publication of application: 21.09.2022
(73) Proprietor: Newfrey LLC, New Britain, CT 06053 (US)
(72) Inventor: Brandl, Björn, 35394 Gießen (DE); Briel, Karl-Heinz, 35394 Gießen (DE); Ivo, Hubert, 35394 Gießen (DE); Jung, Inge, 35394 Gießen (DE); Oehlbach, Alexander, 35394 Gießen (DE); Reich, Thomas, 35394 Gießen (DE); Schug, Alexander, 35394 Gießen (DE); Spieß, Manuel, 35394 Gießen (DE); Weber, Kai-Marius, 35394 Gießen (DE)
(74) Representative: SBD IPAdmin

(56) References cited:
- EP-A1- 3 466 587
- DE-A1- 4 314 528
- JP-B2- 6 219 595
- US-A- 5 252 802

## Description

The present invention relates to a welding gun, and notably to a handheld welding gun for welding an element to a component according to the preamble of claim 1 (see for example DE 43 14 528 A1). More particularly, the present invention relates to a hand welding device for short-time arc welding of elements, such as metal studs, to parts, such as metal sheets.

Welding is a process that has become ubiquitous in various industries for a variety of types of applications. For example, welding is often performed in applications such as shipbuilding, aircraft repair, construction, and so forth. While these welding operations may be automated in certain contexts, there still exists a need for manual welding operations.

In short-time arc welding (also known as stud welding) elements such as metal studs are welded onto metal parts such as metal sheets. The studs serve as anchors for various fastening purposes. Accordingly, the studs may be configured as threaded studs (with metric thread), as coarse-threaded studs, pine tree studs, T-studs, etc. In the automotive industry, stud welding has been much used for some years. Here the stud welding technology serves to fasten body parts, to lay electric leads, to fasten carpeting, to weld bolts to car body panels, wherein fixing clips made of plastic are fixed to connect to the bolts, to which fixing clips cables, wires etc. are fixed, etc. A stroke ignition process may especially be used. A metal stud is first placed in the location on the metal sheet where it is to be welded on. Then a so-called pilot current is switched on and the metal stud is lifted somewhat relative to the metal sheet. Thus, an electric arc is set. Then the welding current proper is switched on and the mutually opposed faces are incipiently fused by the high-energy electric arc. Then the metal stud is again lowered onto the metal sheet so that the respective melts will mingle. The arc is short-circuited. The combined melt solidifies and the welding operation is complete.

EP1432544A1 from the applicant discloses a known hand held welding gun including an element holder, an electromagnetic actuator operably advancing the holder, and a pneumatic element feeding hose.

In some manual welding operations, it may be desirable to monitor weld parameters throughout the welding operation and/or welding gun use before or after the welding operation. While, in automated welding process, the weld parameters may be robotically controlled, parameters like gun motion, damages, ... in a welding operation with a handheld welding gun the welding parameters may depend on the operator's welding technique, the weld pattern and position, the experience of the welding operator, and so forth. Unfortunately, it may be difficult to measure this weld motion during a welding operation due to features of the welding environment, operator considerations, and so forth.

It is well-known to use sensors in a welding apparatus in order to monitor weld parameters. US9975196 for instance discloses an inertial measurement unit affixed to an apparatus. The inertial measurement unit is endowed with a tri-axis gyro and a tri-axis accelerometer. US10335883 is directed to a gravity-based weld travel speed sensing system. An orientation sensor is associated with a welding torch and configured to sense a welding torch orientation relative to a direction of gravity. EP3177423 A1 relates to a welding system comprising position detection systems with a controller configured to determine welding parameters during the welding session based on the outputs of the detection systems. In EP3243040, a system for measuring the orientation of a welding torch for a manual arc welding process is disclosed.

It is an object of the present invention to specify an improved handheld welding gun adapted to monitor a welding operation but also a welding gun use and behaviour before and after the welding operation.

According to a first aspect of the present invention, a handheld welding gun for welding an element to a component is defined in claim 1.

Further preferred embodiment of this first aspect of the invention are defined in the dependent claims.

The first aspect of the present invention provides a compact handheld welding gun easily operated by a user. The known welding guns comprise several sensors or measurement system in order to improve the welding process. Displacement measurement systems are often arranged in welding guns, as notably disclosed in DE102016108612. However, implementing such systems often leads to cumbersome welding guns, which are not easy to handle. This is therefore also an object of the present disclosure to provide a compact welding gun with very low tolerances for the measuring system.

Connecting the control card, the displacement measuring system and the actuator together as defined in claim 1 allows a compact unit, easily mounted within the housing. No further control card is necessary, the displacement measurement system is accurate with low tolerances and the processing system adapted to process the data of a sensor unit or the displacement measuring system is mounted within the housing, which reduces the number of extra-units necessary (no legacy boxes anymore). An external processor which controls the welding process per se is arranged outside of the welding box. The external processor communicates with the processing system.

A specific embodiment of the present invention will now be described, by way of example only and with reference to the accompanying drawings, of which:
Fig. 1 shows a perspective view of a handheld welding gun with a housing having a main portion and a grip having a trigger according to the invention;
Fig. 2 shows a cross-section view of the handheld welding gun of Fig. 1 with a linear actuator, a control card, a holding unit and a nozzle.
Fig. 3A shows an example of a detection method for detecting an improper use of the welding gun of Fig. 1;
Fig. 3B shows an example of a welding parameter detection method for automatically detecting welding parameters of the welding gun of Fig. 1;
Fig. 4 shows the handheld welding gun with the actuator unit mounted within the housing;
Fig. 5 shows the control card with the displacement measuring system;
Fig. 6 shows the control card with the gyroscope sensor;
Fig. 7 shows the actuator unit of Fig. 4;
Fig. 8 shows the actuator rod and the actuator housing;
Fig. 9 shows the actuator unit with the bearings.

Corresponding reference numerals indicate corresponding parts throughout the several views of the drawings.

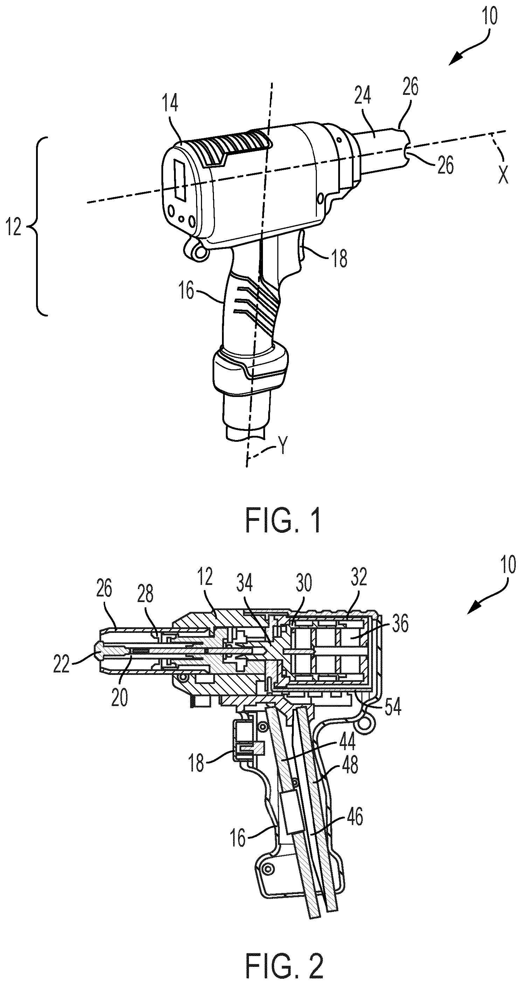

Fig. 1 shows a handheld welding gun 10 for welding an element 22 to a component or workpiece. The welding gun 10 comprises a housing 12. The housing 12 is provided with a main portion 14 and a grip 16. The grip 16 is adapted to be held by a user and comprises a trigger 18. The grip 16 extends from the main portion 14, and notably orthogonally extends from the main portion. More particularly, the main portion 14 longitudinally extends along a longitudinal axis X, and the grip portion longitudinally extends along a grip axis Y, the grip axis Y being sensibly perpendicular to the longitudinal axis X.

As shown in Fig. 1, a holding unit 20 is mounted on the main portion 14. The holding unit 20 is adapted to hold an element 22, for instance a fastener or a stud at a time. The element or fastener is secured to the holding unit 20 and then the holding unit moves the element between a lift position and a plunge position. The holding unit comprises a stud holder adapted to clamp the anchor portion of a stud, the flange portion (destined to be welded to a surface) remaining at a free end of the stud holders. Such stud holders are well known and will not be detailed further.

A welding current contact element is arranged in the housing 12. The welding contact element is adapted to direct a welding current to the element 22. Welding contact elements are also well known and will not be detailed further.

A nozzle 24 (or mouthpiece) surrounds the holding unit 20. The nozzle 24 is adapted to contact the component or workpiece. The nozzle may have a cylindrical shape. The nozzle 24 extends from an extremity of the main portion 14. As seen in Fig. 1 or Fig. 2, the nozzle 24 may be provided with indentations 26 arranged at the end of the nozzle destined to contact the component. The nozzle 24 forms position means serving to position the welding gun 10 (and more particularly the element 22 mounted in the welding gun) at a predetermined distance from the component. The nozzle may also be used as a shield. The nozzle 24 may also comprise holes 28 provided in its cylindrical surface (e.g. at a non-zero distance from the surface adapted to contact the workpiece) to prevent wear and pollution, thus reducing the maintenance needs.

A linear actuator unit 30 is mounted within the main portion 14, as better seen in Fig. 2. The linear actuator unit 30 comprises a linear actuator with a linear actuator housing 32, a linear actuator rod 34 and a motor 36. The motor 36 is for instance a voice coil motor with a coil body and is arranged within the housing 32. The linear actuator rod 34 extends partly inside and outside the housing. The linear actuator rod 34 is movable in translation only and is secured against rotation around the longitudinal axis X. The linear actuator rod 34 is movable along the longitudinal axis X.

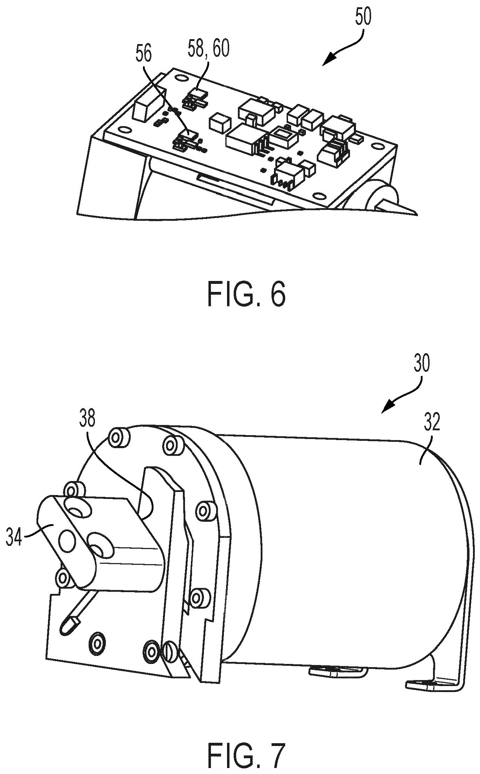

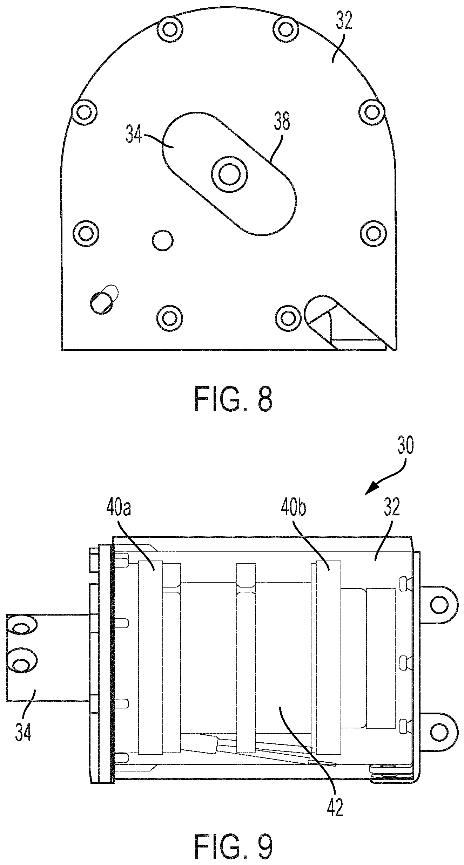

The linear actuator rod 34 is mechanically secured against rotation around the longitudinal axis X, as better seen in Fig. 7 and Fig. 8. As depicted in these figures, the linear actuator rod 34 has a non-circular cross-section and extends outside of the linear actuator housing 32 by an opening 38. The opening 38 has a form-fitting shape which corresponds to the shape of the linear actuator rod's cross section. The linear actuator rod 34 may have an oblong cross-section shape and extends outside from the housing through an opening having a corresponding oblong shape. Other shapes securing the rod against a rotation around the longitudinal axis may be implemented.

As seen in Fig. 9, the movable parts of the linear actuator are guided within the linear actuator housing 32 by a bearing 40, for example a sintered bronze bearing. However, in other embodiments, other bearings may be implemented. The coil body 42 of the linear actuator is arranged within the linear actuator housing 34. Two bearings 40 are arranged between the coil body 42 and the linear actuator housing. A first bearing 40a is arranged at a first end of the coil body. A second bearing 40 b is arranged at a second end, opposite the first end, of the coil body 42. The bearings 40 are in direct contact with the coil body 42. The bearings are glued on the coil body.

The linear actuator (and more particularly the linear actuator rod 34) interacts with the holding unit 20 in order to move an element between the plunge position and the lift position.

As depicted in Fig. 2, a gas tube 44 is provided in the grip 16 to provide gas for the welding process. Welding wires 46 and control wires 48 are also represented.

A sensor unit 50 is arranged within the housing 12 to measure different parameters before and/or during and/or after the welding process. The sensor unit 50 communicates with a processing system 52 comprising a control card 54. The control card 54 is arranged within the housing 12.

The sensor unit 50 comprises a gyroscope sensor 56. The gyroscope sensor 56 is mounted within the housing 12 and is arranged on the control card 54. The gyroscope sensor 56 allows the monitoring of the welding process. The gyroscope sensor 56 also enable to monitor the correct use of the welding gun and to identify the welding points or positions. Indeed, the gyroscope sensor senses changes twists and angles of the welding gun 10. The gyroscope sensor is adapted to sense the angular velocity of the welding gun and thus the angular position of the welding gun can be detected. The position of the gyroscope sensor on the control card is for instance represented in Fig. 6. For example, the gyroscope sensor is fixed on the control card. More particularly, the gyroscope sensor may be fixed to the side of the control card opposite the side facing the linear actuator housing. In an embodiment, the encoder is fixed on the side of the control card facing the linear actuator housing.

The sensor unit 50 may also comprise an accelerometer 58 and/or a magnetometer 60. The accelerometer measures the linear acceleration, wherein the magnetometer senses magnetic field. More particularly, these sensors measure parameters, which added to the those measured by the gyroscope sensor allow a full and complete monitoring of the welding gun and the welding process. The sensor unit 50 thus may measure and collect data related to the orientation, the behaviour, the environment, the speed and acceleration of the welding gun 10. The gyroscope sensor and/or the accelerometer and/or the magnetometer are MEMS sensors. These sensors are positioned on the control card 54. The processing system is adapted to process these collected data and establish a corresponding or adapted response. The accelerometer and/or the magnetometer may be arranged on the side of the control card opposite the side facing the linear actuator housing.

The accelerometer 58 can be integrated with the gyroscope sensor. The accelerometer 58 is for instance a first accelerometer 58 with a first measurement width. A second accelerometer (not illustrated), separate from the first accelerometer, may be provided. The second accelerometer has a second measurement width. The second measurement width is different than the first measurement width. The second accelerometer may be provided in the vicinity of the first accelerometer and arranged on the control card or may be arranged in a different area of the welding gun. The use of a second accelerometer allows a better monitoring of the welding gun, without using expensive sensors.

The collected data enables for instance to detect an improper use of the welding gun or a fall. Indeed, the acceleration measurement may help to detect a misuse of the welding gun or a fall.

The measured data enables a monitoring of the welding gun movements during the welding process. Normally during a welding process, the welding gun 10 must be retained securely in place. Two particular mistakes often occurs: the welding gun 10 is removed too early from the component, or there is a lateral shift of the welding gun 10 during the welding process. Both lead to a weak welding joint. Such mistakes can be detected through the sensor unit 50 and the user can be alerted and invited to check the corresponding joint.

The welding gun 10 may comprise a display and the orientation of the display may be changed depending on the data of the gyroscope sensor.

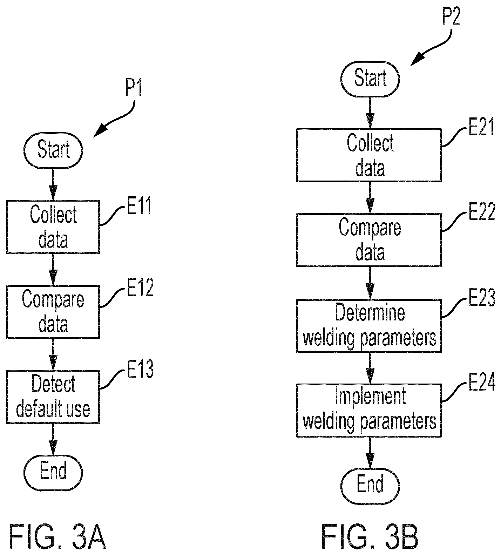

Fig. 3A illustrates a broad method P1 for detecting an improper use of the welding gun using the parameters of the sensor unit. At E11, the method P1 collects data from the gyroscope sensor and/or the accelerometer and/or the magnetometer regarding the motion and the position of the welding gun. At E12 the method P1 compares the collected data to target data or to a library comprising different profiles of use. At E13 the method detects a default use based on caparison analysis. In an embodiment, the improper use can be detected based on statistical analysis.

Fig. 3B shows a method P2 for determining welding parameters which comply with the current welding situation. At E21, the method P2 collects data from the respective sensors (e.g. gyroscope sensor, accelerometer and/or magnetometer). At E22, the method P2 compares the data with pre-recorded data, in order to determine the position and behaviour of the welding gun in its environment. At E23, the method P2 determines the welding parameters (e.g. quantity of gas, energy, time necessary on the lift position, time necessary for the plunge position, ...) based on comparison from a library or using a statistical model or both. Once the welding parameters have been determined, they are implemented by the welding gum.

Different charts of the behaviour of a welding gun provided with the sensor unit can be generated.

As previously mentioned, the magnetometer detects the movement of the motor. The welding gun first contacts the component. Upon contact, the motor is slightly moved by the nozzle. After the contact, no acceleration and a static magnetic field are recorded. A peak in the magnetic field is recorded when the motor, after initiation of the welding process, is activated. When the welding process is over, no acceleration and no disturbance of the magnetic field are recorded. When the welding gun is removed from the component, a disturbance of the magnetic field and an acceleration peak are recorded.

Three phases of the welding process can easily be identified through the data provided by the sensor unit, on notably lift on (corresponding to the lift position of the holding unit), hold step and lift off (corresponding to the plunge position).

When recording the acceleration and the magnetic field, a delay between the end of the welding process and the removal of the welding gun from the component is visible. Such delay, if too short may be synonym of a removal of the welding gun from the component, which is too early.

A comparison of the data recorded during the welding process with a target state or target situation can be made in order to detect any mistake made by the user during the welding process, as above-mentioned.

The processing system can automatically set up adapted welding parameters from the data provided by the sensing unit. Indeed, the position of the welding gun enables to determine if the welding joint has to be made downward or upward and welding parameters like gas, intensity, stroke, ... can be adapted to the welding position of the welding gun.

It is known in current welding gun to count the number of elements which have been welded to the component. However, through the data measured by the sensor unit, it is also possible to improve the features of the current welding gun by automatic recognition of the welding program used by the welding gun. For instance, the processing system may detect a particular welding program from a library comprising a plurality of predetermined welding program with the recorded orientation of the welding gun. Besides, an element mistakenly positioned could also be detected. Besides, the sensor unit allows counting the number of weld spots by using the data provided. This counting function enables to ensure that the welding cycle is completed, and no spot has been disregarded. Besides, for each weld spot a particular orientation or position of the welding gun may be necessary. The sensor unit can confirm that the element have been welded at the correct spots with correct pre-determined weld parameters.

The welding gun comprises a displacement measuring system 62 communicating with the control card. The displacement measuring system is more particularly visible on Fig. 2, Fig. 4 and Fig. 5. Actually, the displacement measuring system 62 is mounted on the control card 54. The linear actuator, the displacement measuring system 62 and the control card 54 are connected together to form a compact actuator unit. The actuator unit is mounted in the main portion at the opposite of the holding unit 20. More particularly, the main portion 14 extends along the longitudinal axis X and is provided at one of its ends with the holding unit 20. The linear actuator unit 30 is mounted within the main portion at the opposite end, as previously described.

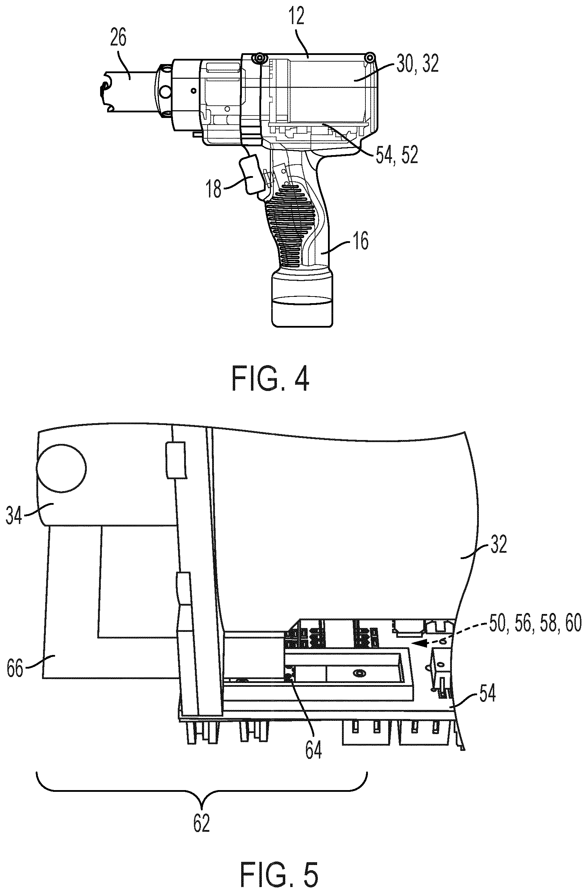

The displacement measuring system 62 is for instance an optical measuring system. It comprises an encoder 64 arranged on the control card 54 and an encoder strip 66. The encoder strip 66 is movable (and more particularly slidingly movable along the longitudinal axis X) with regard to the encoder 64. The encoder strip 66 is fixedly connected to the linear actuator rod 34 and moves above the encoder 64, such that the motion of the linear actuator rod 34 can be detected and recorded by the encoder 64. The encoder strip 66 is fixed to the linear actuator rod 34 through a strip holder, as depicted in Fig. 5.

The encoder 64 is fixed on the control card 54 and is encapsulated in order to avoid any dust or smoulder. The encapsulation is for instance realized with a non-oven material which is arranged around the encoder 64.

The control card 54 with the sensor unit 50 and the encoder 20 is fixed to the linear actuator housing 32 at one end of the main portion, such that a compact control command unit is realized, and it can directly be integrated within the welding gun 10 and no additional part are needed. More particularly, the control card is fixed on a side of the linear actuator housing which is facing the grip (in other words on the bottom side of the linear actuator housing). Actually, the control card 54 is screwed on the linear actuator housing. In other embodiments, the control card may be snap fitted to the linear actuator housing or glued to it. As illustrated in Fig. 5, the linear actuator housing 34 is sensibly cylindrical.

The welding gun is thus directly provided with the control command for processing the sensor unit and/or displacement measurement system data, and no additional part to control these data, outside of the welding gun, is necessary. An external controller still controls the welding process per se.

The welding gun 10 may comprise feeding means by way of which the element 22 can be fed automatically to the holding unit. For example, pneumatic feeding means. The feeding means can feed the element at a posterior end of a tube and then carry them by compressed air as far as an anterior end of the holding means. In another embodiment, the feeding of elements 22 may be manual.

The foregoing description of the embodiments has been provided for purposes of illustration and description.

The scope of the present invention is defined in the appended claims.
welding gun 10
housing 12
main portion 14
a grip 16
trigger 18
holding unit 20
element 22
nozzle 24
indentations 26
holes 28
linear actuator unit 30
linear actuator housing 32
a linear actuator rod 34
and a motor 36
opening 38
bearing 40
coil body 42
first bearing 40a
second bearing 40b
gas tube 44
welding wires 46
control wires 48
sensor unit 50
processing system 52
comprising a control card 54
gyroscope sensor 56
accelerometer 58
and a magnetometer 60
displacement measuring system 62
encoder 64
encoder strip 66

## Claims

1. Handheld welding gun (10) for welding an element (22) to a component comprising:
- a housing (12) with a main portion (14) and a grip (16) with a trigger (18), the grip extending from the main portion,
- a holding unit (20) mounted on the main portion (14) and adapted to movably hold one element (20) between a lift position and a plunge position,
- a linear actuator unit (30) with a linear actuator housing (32) and a linear actuator rod (34) adapted to actuate the holding unit (20) in order to move the element (22) between the lift position and the plunge position, the linear actuator rod (34) extending partly inside and partly outside the linear actuator housing (32),
- a nozzle (24) surrounding the holding unit (20) and adapted to contact the component,
- a welding current contact element arranged in the housing (12) and adapted to direct a welding current to the element (22),
the handheld welding gun (10) being **characterised by**:
- a sensor unit (50) adapted to measure different parameters during the welding process,
- a processing system (52) with a control card (54) adapted to control one or more parameters of the welding process,
- a displacement measuring system (62) communicating with the control card (54), and further **characterised in that** the linear actuator, the displacement measuring system (62) and the control card (54) are connected together such as to form a compact actuator unit, the displacement measuring system (62) being mounted on the control card (54) and **in that** the actuator unit is mounted in the main portion at an opposite side of the holding unit.

2. Handheld welding gun (10) according to claim 1, wherein the displacement measuring system (62) is an optical measuring system and comprises an encoder (64) arranged on the control card (54) and an encoder strip (66).

3. Handheld welding gun (10) according to claim 2, wherein the encoder strip (66) is fixed to the linear actuator rod (34) through a strip holder and is slidingly movable with regard to the encoder (64).

4. Handheld welding gun (10) according to claim 2 or 3, wherein the encoder (64) is encapsulated.

5. Handheld welding gun (10) according to any of claims 1 to 4, wherein the control card (54) is attached to the linear actuator housing (32).

6. Handheld welding gun (10) according to any of claims 1 to 5, wherein the linear actuator rod (34) is so constructed that it is movable along a longitudinal axis (X) with regard to the linear actuator housing (32) and is secured against rotation around said longitudinal axis (X).

7. Handheld welding gun (10) according to claim 6, wherein the linear actuator rod (34) is secured against rotation around said longitudinal axis (X) by the linear actuator housing (32).

8. Handheld welding gun (10) according to any of claims 1 to 7, wherein the linear actuator rod (34) has a non-circular cross-section shape.

9. Handheld welding gun (10) according to claim 8, wherein the linear actuator rod (34) has an oblong cross-section shape.

10. Handheld welding gun (10) according to any of claims 1 to 9, wherein the movable parts of the linear actuator are guided within the linear actuator housing (32) by a bearing (40a, 40b), for example a sintered bronze bearing.

11. Handheld welding gun (10) according to any of claims 1 to 10, wherein a coil body (42) is arranged within the linear actuator housing, and wherein two bearings (40a, 40b) are arranged between the coil body (42) and the linear actuator housing (32), and wherein the first bearing is arranged at a first end of the coil body (42), and the second bearing is arranged at a second end of the linear actuator housing.

12. Handheld welding gun (10) according to claim 11, wherein the bearings (40a, 40b) are in direct contact with the coil body (42).

## Patentansprüche

1. Handschweißpistole (10) zum Schweißen eines Elements (22) an eine Komponente, die Folgendes umfasst:
- ein Gehäuse (12) mit einem Hauptabschnitt (14) und einem Griff (16) mit einem Auslöser (18), wobei sich der Griff von dem Hauptabschnitt erstreckt,
- eine Halteeinheit (20), die auf dem Hauptabschnitt (14) montiert ist und so angepasst ist, dass sie beweglich ein Element (20) zwischen einer Hubposition und einer Eintauchposition hält,
- eine Linearbetätigungsvorrichtungseinheit (30) mit einem Linearbetätigungsvorrichtungsgehäuse (32) und einer Linearbetätigungsvorrichtungsstange (34), die dazu angepasst ist, die Halteeinheit (20) zu betätigen, um das Element (22) zwischen der Hubposition und der Eintauchposition zu bewegen, wobei sich die Linearbetätigungsvorrichtungsstange (34) teilweise innerhalb und teilweise außerhalb des Linearbetätigungsvorrichtungsgehäuses (32) erstreckt,
- eine Düse (24), die die Halteeinheit (20) umgibt und so angepasst ist, dass sie die Komponente berührt,
- ein Schweißstromkontaktelement, das in dem Gehäuse (12) angeordnet ist und so angepasst ist, dass es einen Schweißstrom zu dem Element (22) leitet,
wobei die Handschweißpistole (10) **gekennzeichnet ist durch**:
- eine Sensoreinheit (50), die so angepasst ist, dass sie während des Schweißprozesses unterschiedliche Parameter misst,
- ein Verarbeitungssystem (52) mit einer Steuerkarte (54), die so angepasst ist, dass sie einen oder mehrere Parameter des Schweißprozesses steuert,
- ein Wegmesssystem (62), das mit der Steuerkarte (54) kommuniziert, und weiter **dadurch gekennzeichnet, dass** die Linearbetätigungsvorrichtung, das Wegmesssystem (62) und die Steuerkarte (54) so miteinander verbunden sind, dass sie eine kompakte Betätigungsvorrichtungseinheit bilden, wobei das Wegmesssystem (62) auf der Steuerkarte (54) montiert ist, und dadurch, dass die Betätigungsvorrichtungseinheit im Hauptabschnitt auf einer gegenüberliegenden Seite der Halteeinheit montiert ist.

2. Handschweißpistole (10) nach Anspruch 1, wobei das Wegmesssystem (62) ein optisches Messsystem ist und einen auf der Steuerkarte (54) angeordneten Encoder (64) und einen Encoderstreifen (66) umfasst.

3. Handschweißpistole (10) nach Anspruch 2, wobei der Encoderstreifen (66) mittels eines Streifenhalters an der Linearbetätigungsvorrichtungsstange (34) befestigt und in Bezug auf den Encoder (64) bewegbar ist.

4. Handschweißpistole (10) nach Anspruch 2 oder 3, wobei der Encoder (64) verkapselt ist.

5. Handschweißpistole (10) nach einem der Ansprüche 1 bis 4, wobei die Steuerkarte (54) am Linearbetätigungsvorrichtungsgehäuse (32) befestigt ist.

6. Handschweißpistole (10) nach einem der Ansprüche 1 bis 5, wobei die Linearbetätigungsvorrichtungsstange (34) so konstruiert ist, dass sie entlang einer Längsachse (X) in Bezug auf das Linearbetätigungsvorrichtungsgehäuse (32) bewegbar ist und gegen Drehung um die Längsachse (X) gesichert ist.

7. Handschweißpistole (10) nach Anspruch 6, wobei die Linearbetätigungsvorrichtungsstange (34) durch das Linearbetätigungsvorrichtungsgehäuse (32) gegen Drehen um die Längsachse (X) gesichert ist.

8. Handschweißpistole (10) nach einem der Ansprüche 1 bis 7, wobei die Linearbetätigungsvorrichtungsstange (34) einen nicht kreisförmigen Querschnitt aufweist.

9. Handschweißpistole (10) nach Anspruch 8, wobei die Linearbetätigungsvorrichtungsstange (34) einen länglichen Querschnitt aufweist.

10. Handschweißpistole (10) nach einem der Ansprüche 1 bis 9, wobei die beweglichen Teile der Linearbetätigungsvorrichtung innerhalb des Linearbetätigungsvorrichtungsgehäuses (32) durch ein Lager (40a, 40b), beispielsweise ein Sinterbronzelager, geführt werden.

11. Handschweißpistole (10) nach einem der Ansprüche 1 bis 10, wobei ein Spulenkörper (42) innerhalb des Linearbetätigungsvorrichtungsgehäuses angeordnet ist, und wobei zwei Lager (40a, 40b) zwischen dem Spulenkörper (42) und dem Linearbetätigungsvorrichtungsgehäuse (32) angeordnet sind, und wobei das erste Lager an einem ersten Ende des Spulenkörpers (42) angeordnet ist und das zweite Lager an einem zweiten Ende des Linearbetätigungsvorrichtungsgehäuses angeordnet ist.

12. Handschweißpistole (10) nach Anspruch 11, wobei die Lager (40a, 40b) in direktem Kontakt mit dem Spulenkörper (42) stehen.

## Revendications

1. Pistolet de soudage portatif (10) pour souder un élément (22) à un composant comprenant :
- un boîtier (12) avec une portion principale (14) et une poignée (16) avec une gâchette (18), la poignée s'étendant à partir de la portion principale,
- une unité de maintien (20) montée sur la portion principale (14) et adaptée pour maintenir de manière mobile un élément (20) entre une position de levage et une position d'enfoncement,
- une unité d'actionneur linéaire (30) avec un boîtier d'actionneur linéaire (32) et une tige d'actionneur linéaire (34) adaptée pour actionner l'unité de maintien (20) afin de déplacer l'élément (22) entre la position de levage et la position d'enfoncement, la tige d'actionneur linéaire (34) s'étendant partiellement à l'intérieur et partiellement à l'extérieur du boîtier d'actionneur linéaire (32),
- une buse (24) entourant l'unité de maintien (20) et adaptée pour entrer en contact avec le composant,
- un élément de contact de courant de soudage disposé dans le boîtier (12) et adapté pour diriger un courant de soudage vers l'élément (22),
le pistolet de soudage portatif (10) étant **caractérisé par** :
- une unité de capteur (50) adaptée pour mesurer différents paramètres pendant le processus de soudage,
- un système de traitement (52) avec une carte de commande (54) adaptée pour commander un ou plusieurs paramètres du processus de soudage,
- un système de mesure de déplacement (62) communiquant avec la carte de commande (54), et **caractérisé en outre en ce que** l'actionneur linéaire, le système de mesure de déplacement (62) et la carte de commande (54) sont connectés ensemble de manière à former une unité d'actionneur compacte, le système de mesure de déplacement (62) étant monté sur la carte de commande (54) et **en ce que** l'unité d'actionneur est montée dans la portion principale au niveau d'un côté opposé de l'unité de maintien.

2. Pistolet de soudage portatif (10) selon la revendication 1, dans lequel le système de mesure de déplacement (62) est un système de mesure optique et comprend un encodeur (64) agencé sur la carte de commande (54) et une bande d'encodeur (66).

3. Pistolet de soudage portatif (10) selon la revendication 2, dans lequel la bande d'encodeur (66) est fixée à la tige d'actionneur linéaire (34) par l'intermédiaire d'un porte-bande et est mobile de manière coulissante par rapport à l'encodeur (64).

4. Pistolet de soudage portatif (10) selon la revendication 2 ou 3, dans lequel l'encodeur (64) est encapsulé.

5. Pistolet de soudage portatif (10) selon l'une quelconque des revendications 1 à 4, dans lequel la carte de commande (54) est attachée au boîtier d'actionneur linéaire (32).

6. Pistolet de soudage portatif (10) selon l'une quelconque des revendications 1 à 5, dans lequel la tige d'actionneur linéaire (34) est construite de sorte qu'elle est mobile le long d'un axe longitudinal (X) par rapport au boîtier d'actionneur linéaire (32) et est fixée contre la rotation autour dudit axe longitudinal (X).

7. Pistolet de soudage portatif (10) selon la revendication 6, dans lequel la tige d'actionneur linéaire (34) est fixée contre la rotation autour dudit axe longitudinal (X) par le boîtier d'actionneur linéaire (32).

8. Pistolet de soudage portatif (10) selon l'une quelconque des revendications 1 à 7, dans lequel la tige d'actionneur linéaire (34) présente une forme de section transversale non circulaire.

9. Pistolet de soudage portatif (10) selon la revendication 8, dans lequel la tige d'actionneur linéaire (34) présente une forme de section transversale oblongue.

10. Pistolet de soudage portatif (10) selon l'une quelconque des revendications 1 à 9, dans lequel les parties mobiles de l'actionneur linéaire sont guidées au sein du boîtier d'actionneur linéaire (32) par un palier (40a, 40b), par exemple un palier en bronze fritté.

11. Pistolet de soudage portatif (10) selon l'une quelconque des revendications 1 à 10, dans lequel un corps de bobine (42) est agencé au sein du boîtier d'actionneur linéaire, et dans lequel deux paliers (40a, 40b) sont agencés entre le corps de bobine (42) et le boîtier d'actionneur linéaire (32), et dans lequel le premier palier est agencé à une première extrémité du corps de bobine (42), et le second palier est agencé à une seconde extrémité du boîtier d'actionneur linéaire.

12. Pistolet de soudage portatif (10) selon la revendication 11, dans lequel les paliers (40a, 40b) sont en contact direct avec le corps de bobine (42).
